Europäisches Patentamt

European Patent Office

Office européen des brevets

(19)

(11) Publication number: 0 120 636
A1

(12) **EUROPEAN PATENT APPLICATION**

(21) Application number: 84301575.1

(22) Date of filing: 09.03.84

(51) Int. Cl.³: F 16 H 37/08

(30) Priority: 22.03.83 GB 8307835

(43) Date of publication of application:
03.10.84 Bulletin 84/40

(84) Designated Contracting States:
AT BE CH DE FR GB IT LI LU NL SE

(71) Applicant: LEYLAND VEHICLES LIMITED
Lancaster House
Leyland Preston PR5 1SN Lancashire(GB)

(72) Inventor: Greenwood, Christopher John
14 Edinburgh Close
Leyland Lancs(GB)

(74) Representative: Rock, Olaf Colin et al,
LRL Patent Trademark and Licensing Dept. Cowley Body
Plant
Cowley Oxford OX4 5NL(GB)

(54) Vehicle transmission system.

(57) A simple and compact vehicle transmission system for cars or buses comprises a continuously-variable-ratio transmission unit (12) of the toroidal race-rolling traction type driven by a coaxial input shaft (1) from an engine. First (13) And second (14) simple epicyclic gears are arranged coaxially to convey drive to a drive shaft (3) in either of two regimes in accordance with the transmission ratio. In "high regime", for faster forward speeds, a clutch (5) engages and locks the annulus (4) of the second simple epicyclic gear (14) to the transmission output (2), conveying drive directly to the drive shaft (3) by bevel gearing. The change between low and high regimes in synchronous.

In "low regime", for lower forward and reverse speeds and neutral, the clutch (5) is opened. A band brake (11) locks a planetary gear carrier (7) of the first simple epicyclic gear (13), and the input shaft (1) drives an annulus (8) at a fixed ratio. The sun gear (15) and planetary gears of the second sinple epicyclic are connected respectively to the transmission output (2) and first epicyclic gear annulus (8), to provide a summed output via the annulus (4) to the drive shaft (3).

EP 0 120 636 A1

Croydon Printing Company Ltd.

0120636

## VEHICLE TRANSMISSION SYSTEM

X1452

This invention relates to a vehicle transmission system including a continuously-variable-ratio transmission unit of the toroidal race rolling traction type.

Transmission systems of this type have been developed in various configurations for cars and commercial vehicles. One example is described in our published British Patent Application No. 2108599. In these transmissions, neutral and reverse are produced by combining a direct output from the vehicle engine with an indirect output taken via the continuously-variable-ratio transmission and reversed in sense. In this so-called 'low regime', the ratio of the continuously-variable-ratio transmission is varied to produce either a low range of reverse ratios, a low range of forward ratios, or geared neutral (in which the engine is rotating, but the continuously-variable-ratio transmission's output is rotating in the opposite sense and the combined output is zero). The forward range of ratios is produced by using the output of the continuous-variable-ratio transmission on its own (so called 'high regime').

As explained in this Specification, a problem arises in combining the 'direct' and 'indirect' outputs for the low regime, in that to produce a desired maximum forward ratio in this regime it may be necessary to combine the 'direct' and 'indirect' outputs in an awkward ratio, because the particular continuously-variable-ratio transmission used will have an optimum range of speeds of operation, depending on roller diameter, and so will the particular power unit. Given that the speed ranges of the 'direct' and 'indirect' output are fixed, a particular maximum forward ratio, and hence particular maximum combined output speed, can only be met for one particular ratio of combination.

A vehicle transmission system in accordance with the invention comprises a casing, an input shaft for connection to an engine output shaft, a toroidal race-rolling traction type continously-variable-ratio transmission unit coaxial with and driven by the input shaft, a first simple epicyclic gear comprising a sun gear, planetary gears on a carrier and an annulus, one part of which gear is driven by the input shaft and another part can be locked relative to the transmission casing, a second simple epicyclic gear comprising a sun gear, planetary gears on a carrier, and an annulus, one part of which gear is driven by the transmission unit output shaft and another part is driven by the first simple epicyclic gear, wherein the sun gear and annulus of both simple epicyclic gears are coaxial with the input shaft, and a drive shaft for connection to a differential gear, the drive shaft driven by the annulus of the second simple epicyclic gear. This arrangement represents a simple solution to the problem of gear ratios in low regime.

In the preferred embodiment, the first epicyclic gear has its sun gear connected to the input shaft its planetary gears carrier lockable relative to the casing, and its annulus connected to the planetary gears carrier of the second epicyclic gear; the sun gear of the second epicyclic gear is connected to the transmission unit output shaft.

The system preferably is operable in a high regime by locking the second epicyclic gear annulus to the transmission unit output; this is conveniently achieved by a clutch, which is open in low regime and engages in high regime.

In some applications of the system, for example in rear-engined buses, it is desirable to take drive from the system as close as possible to the engine, so that the drive shaft may be as long as possible. This is optimised in the preferred embodiment by arranging that the second epicyclic gear, from whose annulus the drive is taken, lies on the engine side of the first epicyclic gear, i.e. between the transmission unit and the first epicyclic gear.

The angle between the drive shaft and the input shaft may be 90 degrees or any acute angle. In the preferred embodiment the drive shaft is coupled to the second epicyclic gear annulus by bevelled gearing, allowing the drive shaft to be angled at about 45 degrees to the input shaft.

In order that the invention may be better understood, the preferred embodiment will now be described with reference to the accompanying schematic drawing of a transmission system with a transmission unit and two coaxial simple epicyclic gears.

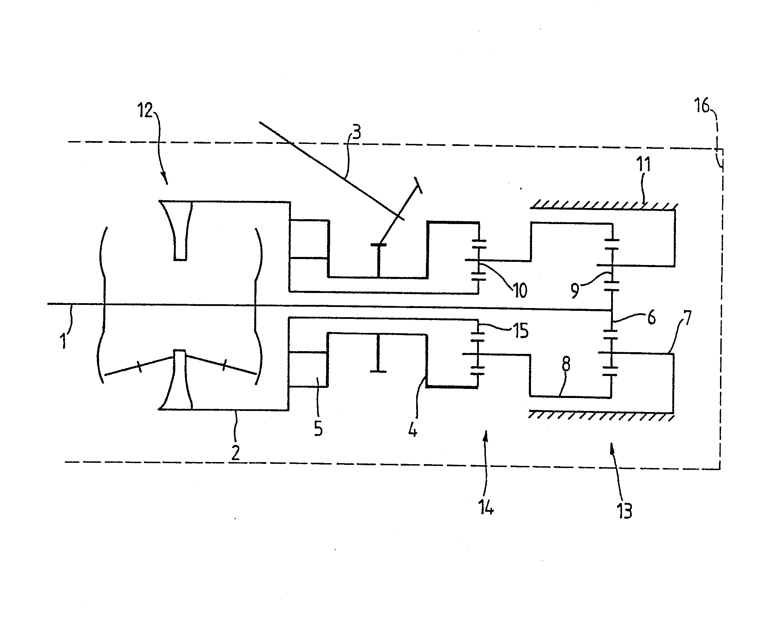

Referring to the drawing, an input shaft 1 connected to an engine (not shown) defines the axis of the system. A continuously-variable-ratio transmission unit 12 of the toroidal race-rolling traction type has its input connected to the input shaft 1. An output 2 of the transmission unit includes a shaft extending coaxially with the input shaft 1. A first simple epicyclic gear 13 for changing the input shaft speed comprises a sun gear 6 connected to the input shaft 1, planetary gears 9 held by a carrier 7, and an outer annulus 8. A second epicyclic gear 14 has a sun gear 15 connected to the shaft extension of the transmission unit output 2, planetary gears 10 carried by the annulus 8 of the first epicyclic gear, and an annulus 4 which provides drive by bevel gearing to a drive shaft 3. The drive shaft 3 in this example is inclined at about 45 degrees to the system axis, and connects an axle differential gear to the transmission system at a point which is as close as practically possible to the transmission unit, at the engine end of the system. In a bus where the engine and transmission are above and to the rear of the rear axle, this enables the drive shaft to be longer than hitherto, and at a convenient angle to the horizontal.

This preferred embodiment of the system is operable in two regimes, in the manner described above. In the low regime, where the drive is at low speeds in either the forward or reverse direction, or at neutral, the carrier 7 of the planetary gears 9 of the first epicyclic gear 13 is held stationary relative to the transmission casing 16 by applying a band brake 11. The use of a band brake 11 instead of a clutch is considered preferable since it is easier to control internally by oil pressure. The brake is not required to slip, so there is no danger of excessive wear.

It will be appreciated that the second epicyclic gear 14 sums the outputs from the transmission unit 12, and the input shaft 1 via the first simple epicyclic gear 13. The transmission unit 12 operates continuously, with the engine running, in the same direction of rotation, while the drive shaft 3, driven by the second simple epicyclic gear 14, rotates through a range of low forward and reverse speeds, according to the ratio set in the transmission unit.

A microprocessor control unit (not shown) senses when the drive shaft speed approaches the maximum acceptable for low regime operation; this may for example correspond to a conventional "second gear" drive speed. The system then changes into high regime, for the faster forward speeds only. At the change-over speed, the rotational speed of the second epicyclic gear annulus 4 matches the speed of the transmission unit output 2. A clutch 5 then engages and locks the annulus 4 to the transmission unit output 2 throughout high regime operation. The band brake 11 is released, and the simple epicyclic gear 13 and 14 are no longer required for power transmission.

The transmission system can be used in a driveline including a flywheel system for regenerative braking, as described for example in our European Patent Application No. 61276. Moreover, the invention is not limited in its application to heavy vehicles such as buses; it is sufficiently simple and compact for a small saloon car.

CLAIMS

1.  A vehicle transmission system comprising: a casing (16); an input shaft (1) for connection to an engine output shaft; a toroidal race-rolling traction type continuously-variable-ratio transmission unit (2) coaxial with and driven by the input shaft; a first simple epicyclic gear (13) comprising a sun gear (6), planetary gears (9) on a carrier and an annulus (8), one part of which gear is driven by the input shaft and another part can be locked relative to the transmission casing; and characterized by a second simple epicyclic gear (14) comprising a sun gear (15), planetary gears (10) on a carrier, and an annulus (4), one part of which gear is driven by the transmission unit output shaft and another part is driven by the first simple epicyclic gear (13), wherein the sun gear and annulus of both simple epicyclic gears are coaxial with the input shaft; and a drive shaft (3) for connection to a differential gear, the drive shaft driven by the annulus (4) of the second simple epicyclic gear.

2.  A vehicle transmission system according to Claim 1, wherein the first epicyclic gear (13) has its sun gear (6) connected to the input shaft, its planetary gears carrier lockable relative to the casing, and its annulus (8) connected to the planetary gears (10) carrier of the second epicyclic gear (14), and the sun gear (15) of the second epicyclic gear is connected to the transmission output shaft.

3.  A vehicle transmission system according to Claim 1 or 2, comprising a clutch (5) for locking the second epicyclic gear annulus (4) to the transmission output during a high regime mode.

4.  A vehicle transmission system in accordance with Claim 3, for operation in low or high regime modes, wherein the change between the low and high regime modes is sychronous, the clutch (5) being arranged to lock the second epicyclic gear annulus to the transmission output only when their rotational speeds match.

5.  A vehicle transmission system according to Claim 1, 2, 3 or 4, wherein the second epicyclic gear (14), from whose annulus (4) the drive is taken, lies on the engine side of the first epicyclic gear (13).

6.  A vehicle transmission system according to Claim 1, 2, 3, 4 or 5, wherein the drive shaft (3) is coupled to the second epicyclic gear annulus (4) by bevelled gearing, allowing the drive shaft to be angled at an acute angle with respect to the input shaft.

7.  A vehicle transmission system according to any of Claims 1 to 6, wherein the said part of the first simple epicyclic gear (13) which is lockable to the transmission casing is lockable thereto by a band brake (11).

## European Patent Office

**EUROPEAN SEARCH REPORT**

### DOCUMENTS CONSIDERED TO BE RELEVANT

| Category | Citation of document with indication, where appropriate, of relevant passages | Relevant to claim | CLASSIFICATION OF THE APPLICATION (Int Cl. 3) |
|---|---|---|---|
| A | FR-A-1 464 924 (NATIONAL RESEARCH DEVELOPMENT CORP.) * Page 6, right-hand column, line 26 - page 7, right-hand column, line 8; figures 1, 6, 11 * | 1 | F 16 H 37/08 |
| | --- | | |
| P,A | EP-A-0 084 724 (LEYLAND VEHICLES LTD.) | | |
| | --- | | |
| P,A | EP-A-0 078 124 (LEYLAND VEHICLES LTD.) | | |
| | ----- | | |

|  |
|---|
| TECHNICAL FIELDS SEARCHED (Int. Cl. 3) |
| F 16 H 37/00 |

The present search report has been drawn up for all claims

| Place of search BERLIN | Date of completion of the search 09-05-1984 | Examiner LEMBLE Y.A.F.M. |
|---|---|---|